# EUROPÄISCHE PATENTANMELDUNG

(11) **EP 1 780 228 A1**
(43) Veröffentlichungstag der Anmeldung: **02.05.2007**
(21) Anmeldenummer: 06021490.5
(22) Anmeldetag: 13.10.2006
(51) Int. Cl.: C08F 246/00, C08F 2/22, C09D 201/00, C09D 11/10

(54) **Wachscopolymere und deren Anwendung**

(30) Priorität: 25.10.2005 DE 102005050996
(71) Anmelder: Clariant Produkte (Deutschland) GmbH, 65929 Frankfurt am Main (DE)
(72) Erfinder: Heinrichs, Franz-Leo, Dr., 86456 Gablingen (DE)
(74) Vertreter: Paczkowski, Marcus

(57) **Zusammenfassung**

Ein Copolymer aus mindestens zwei Monomeren ausgewählt aus der Gruppe enthaltend:
A
Acrylsäureester/Methacrylsäureester,
B
ethylenisch ungesättigte Säuren wie Acrylsäure, Methacrylsäure, Itaconsäure,
C
Styrol oder Styrolderivate,
D
di- und trifunktionelle ethylenisch ungesättigte Verbindungen wie Divinylbenzol, Glykoldiacrylat, TMP Triacrylat,
E
Vinylether,
F
polymerisierbare Wachse,

enthält Komponente F in einer Menge von mindestens 1 Gew.-% und eignet sich zur Beschichtung von Papier, Holz, Saatgut oder Fußböden, als Bindemittel in Druckfarben, zur Autopflege, als Mattierungsmittel in Lacken oder als Tonerwachs.

## Beschreibung

Die Erfindung betrifft Copolymere aus ethylenisch ungesättigten Carbonsäuren, deren Derivaten, Styrol oder Styrolderivaten und radikalisch polymerisierbaren Wachsen mittels radikalisch initiierter Polymerisation und die Verwendung dieser Produkte in Substanz oder als Dispersionen zur Herstellung hydrophober Filme in Anwendungsbereichen wie Lederpflegemittel, Fußbodenpflegemittel, Autopflegemittel, Holzlacken, Druckfarben, Tinten, Tonern, Textilverarbeitung, Papierherstellung und -verarbeitung und Klebmittelherstellung.

Wachscopolymere können über radikalische Polymerisation bei hohem Druck aus Ethylen und geeigneten Comonomeren in Substanz, in Lösemitteln oder in Emulsionspolymerisation hergestellt werden.

Im Vergleich zu anderen chemischen Verfahren ist die Herstellung von Emulsionspolymerisaten relativ einfach und vielfach beschrieben. In einem Schritt wird das Polymer hergestellt, dann werden flüchtige Verbindungen abgetrennt, dann werden Grobanteile abgetrennt und dann kann das Polymerisat verwendet werden. Das kann entweder nach Aufarbeitung als Trockensubstanz geschehen oder nach entsprechender Formulierung als Dispersion. Es können dazu Batch, Semibatch oder kontinuierliche Verfahren eingesetzt werden. Die allgemeinen chemischen Eigenschaften werden bestimmt durch die Chemie der Monomere, die Kristallinität des Polymers, die Glasübergangstemperatur T_{g} und das Molgewicht. Die Performance des Polymers wird bestimmt durch die Wahl der eingesetzten Monomere oder Monomerkombinationen. So bewirkt Vinylchlorid Feuerfestigkeit, Acrylate haben gute Thermobeständigkeit und Bewitterungsbeständigkeit, Acrylnitril gibt gute Lösemittelbeständigkeit.

Basismonomere für die Emulsionspolymerisation

| Monomer | T_{g} °C |
|---|---|
| 1,4 Butadien | -85 |
| n-Butylacrylat | -54 |
| 2-Ethylhexylacrylat | -50 |
| Methylacrylat | 10 |
| Vinylacetat | 32 |
| Vinylchlorid | 81 |
| Acrylnitril | 97 |
| Methylmethacrylat | 100 |
| Styrol | 105 |

Zur Einstellung bestimmter Eigenschaften werden geeignete Monomere miteinander Kombiniert. So sind für die Erreichung nachfolgend genannter Eigenschaften Monomere oder Monomerkombinationen bekannt:
Zuordnung von Monomeren zu Polymereigenschaften

| Eigenschaft | bevorzugtes Monomer oder Monomerkombination |
|---|---|
| | |
| Steifigkeit | Methylacrylat, Acrylnitril, Styrol |
| Weichheit | n-Butylacrylat, Ethylacrylat, Butadien |
| Klebrigkeit | 2-Ethylhexylacrylat, Hexylacrylat |
| Wasserbeständigkeit | hydrophobe Monomere, Butylacrylat, |
| Vernetzungen | |
| Lösemittelbeständigkeit | Acrylnitril, Vernetzung |
| Zugfestigkeit | hohe T_{g}, Styrol, MMA, Acrylnitril |
| Dehnung | niedrige T_{g}, Butylacrylat, Styrol |
| Thermoplastische Eigenschaften | keine Vernetzung |
| Quellverhalten | Acrylsäure |

Hohe Anteile an wasserlöslichen Monomeren wie Acrylsäure, Methacrylsäure, Itaconsäure Fumarsäure, Hydroxyethylacrylat, Acrylamid führen ebenfalls zu besonderen Effekten.

Ein hoher Anteil an Acrylsäure bewirkt eine Anreicherung der Ladung an der Partikeloberfläche, was bei hohem pH zur Verdickung führt, die Ladungsanreicherung trägt aber auch zur Erhöhung der mechanischen Belastbarkeit der Dispersionen bei, ebenso können solche Monomere die Stabilität gegen Elektrolyte oder Salzzugaben verbessern.

Als Tenside werden anionische oder nichtionische Tenside, meistens als Kombinationen eingesetzt.

Als Starter können sowohl organische als auch anorganische Radikalbildner eingesetzt werden, meistens Peroxide oder Peroxosalze.

Zur Kontrolle des Molgewichts werden Regler eingesetzt, Substanzen, die als Radikalfänger in das Kettenwachstum eingreifen.

In vielen Anwendungen ist es üblich zur präzisen Einstellung der Filmeigenschaften z.B. in Bezug auf Gleitwirkung, Abriebfestigkeit, Hydrophobie, Polierbarkeit, Griff oder Glanz die Polymerdispersionen mit Wachsdispersionen oder Dispersionen gemahlener Wachse zu kombinieren. Bekannt ist diese Vorgehensweise aus dem Bereich der Druckfarben und Lacke, Textilverarbeitung, Pflegemittelanwendung Lederherstellung und Papierherstellung.

Hierbei handelt es sich aber immer um physikalische Mischungen, die die Basisperformance des Films nicht mehr erreichen. Es wurden schon vielfach Versuche unternommen, die Eigenschaften durch den Einbau geeigneter Monomere direkt einzustellen. Bekannt sind Kombinationen aus Ethylen und Acrylsäure, oder die Pfropfung von unpolaren Kunststoffen mit polaren Monomeren. Resultierende niedermolekulare kristalline Wachse sind aber in der Regel zu hart und zu spröd und schuppen ab, nichtkristalline amorphe Wachse haben nicht ausreichende Module um die benötigten Filmeigenschaften für die meisten Anwendungen zu erfüllen. Ebenso sind die Molgewichte zumeist niedriger als die für die Bildung fester Filme erforderlichen 50 000 g/mol. Ein weiterer Ansatz ist der Einbau hydrophober Acrylsäurederivate wie Laurylacrylat oder Stearylacrylat, jedoch reichen die Eigenschaften der Seitenketten in der Regel nicht aus, den Wachscharakter in den Film einzubringen.

Ein Lösungsansatz zur chemischen Einbindung von Wachsen wird in DE 10 003 118 beschrieben. Hierbei handelt es sich aber um die Einbindung von Partikeln in einen in situ hergestellten Film. Die in DE 10 003 118 beschriebenen festen Wachse sind Umsetzungsprodukte aus mehrwertigen Alkoholen und Montanwachssäure, die so mit Acrylsäure nach verestert sind, dass daraus hergestellte Wachspartikel in UV-Lacke chemisch eingebunden werden und somit nur sehr schwierig wieder aus dem Film herausgearbeitet werden können.

Es bestand daher die Aufgabe, Polymere herzustellen mit ausreichendem Molgewicht für die Filmfestigkeit, und geeigneter Monomerkombination für das Erreichen wachstypischer Eigenschaften.

Es wurde nun überraschend gefunden, dass die bekannten UV-härtbaren Wachsderivate bei geeigneter Formulierung in die Emulsionspolymerisation eingesetzt werden können und die daraus resultierenden Emulsionspolymerisate im Film die geforderte Festigkeit und die gewünschten Wachseigenschaften zeigten.

Die Aufgabe wird erfindungsgemäß gelöst durch ein Copolymer aus mindestens zwei Monomeren ausgewählt aus der Gruppe enthaltend:
A Acrylsäureester/Methacrylsäureester,
B ethylenisch ungesättigte Säuren wie Acrylsäure, Methacrylsäure, Itaconsäure, C Styrol oder Styrolderivate,
D di- und trifunktionelle ethylenisch ungesättigte Verbindungen wie Divinylbenzol, Glykoldiacrylat, TMP Triacrylat,
E Vinylether,
F polymerisierbare Wachse,
wobei die Komponente F in dem Copolymer in einer Menge von mindestens 1 Gew.-% enthalten ist.

Vorzugsweise enthält das Copolymer die Monomeren der einzelnen Komponenten enthält in folgenden Mengen
A Ester im Bereich von 10 bis 98 Gew.-%,
B Säuren im Bereich von 0,5 bis 5 Gew.-%,
C Styrol im Bereich von 0 bis 90 Gew.-%,
D di- und trifunktionelle Verbindungen im Bereich von 0 bis 5 Gew.-%,
E Vinylether im Bereich von 0 bis 20 Gew.-% und
F Wachse im Bereich von 1 bis 80 Gew.-%, jeweils bezogen auf das Gesamtgewicht des Copolymers.

Die Copolymere der vorliegenden Erfindung werden vorzugsweise als wässrige Dispersion oder alternativ als getrockneter Festkörper oder als getrockneter Festkörper mit gezielt eingestellter Partikelgröße eingesetzt. Die gezielt eingestellte Partikelgröße wird dabei vorzugsweise durch Agglomeration und nachfolgende Trocknung oder durch Trocknung und anschließende Mahlung oder durch Sprühtrocknung und nachfolgende Klassierung erreicht.

Die Erfindung wird durch die nachfolgenden Ausführungsbeispiele genauer beschrieben.

### Beispiel 1

Herstellbeispiel für ein radikalisch polymerisierbares Wachs:
Umsetzung eines vierwertigen Alkohols mit einer Mischung aus langkettigen Monocarbonsäuren und langkettigen Dicarbonsäuren (Montanwachssäure) zu einem Vorester mit 2,3 mol freien OH-Gruppen, Zielprodukt mit einem Mol Acrylsäureester.

Montanwachssäure wird aufgeschmolzen, Pentaerythrit und Sn-Katalysator bei einer Temperatur von 120°C zugesetzt, dann wird weiter aufgeheizt und bei 190°C verestert bis die SZ < 10 erreicht ist. Der Ansatz wird abgekühlt auf eine Temperatur von 120°C, Methansulfonsäure zugesetzt, Acrylsäure zudosiert und verestert bis die SZ < 10 erreicht ist. Reaktionswasser und überschüssige Acrylsäure werden abdestilliert.

Der Katalysator wird neutralisiert, flüchtige Bestandteile im Vakuum abdestilliert, filtriert und konfektioniert.

### Ansatz reaktives Wachscompound

| | | | | | |
|---|---|---|---|---|---|
| Pentaerythrit | 1,00 | mol | SZ | 13 | mg KOH |
| Montanwachssäure | 2,00 | mol | VZ | 172 | mg KOH |
| Acrylsäure | 1,10 | mol | Tp | 76 | °C |
| Sn-Katalysator | 0,15 | Gew.-% | SV100 | 223 | mPa·s |
| Methansulfonsäure | 0,10 | Gew.-% | | | |

In allen Verbindungen kann der Einbau der Acrylsäure durch 13-C-NMR und IR bestätigt werden.

### Beispiel 2

### Herstellbeispiel für eine reaktive Wachsemulsion

Reaktivwachs Licomont ER 165 bei einer Temperatur < 120°C unter langsamen rühren, schmelzen.

Die Schmelze wird dann mit der Wasser/Emulgator Mischung bei 90°C kombiniert und die entstandene Emulsion wird schnell gekühlt. Der Festkörper der Dispersion liegt bei ca. 25 %, der Gehalt an polymerisierbarem Wachs liegt bei 20 %.

### Reaktive Wachsemulsion

| Komponenten | Einheit | Menge |
|---|---|---|
| Licomont ER 165 | g | 20,48 |
| Emulgatormischung | g | 4,27 |
| KOH 43 %ig | g | 0,85 |
| E-Wasser | g | 74,3 |
| Konservierungsmittel | g | 0,1 |
| Dispersion | g | 100 |

### Beispiel 3

### Herstellbeispiel für eine erfindungsgemäße Wachscopolymerdispersion mit MFT 32

Wasser, Emulgator und ein Teil von Monomer 1 werden vorgelegt und auf 75°C aufgeheizt Ammoniumperoxodisulfat wird in E-Wasser gelöst und zugeben. Nach dem Start der Reaktion wird auf 80°C aufgeheizt und der Rest von Monomer 1, Monomer 2 und die Reaktivwachsdispersion aus Beispiel 2 dosiert. Der Ansatz wird bis zur vollständigen Umsetzung der Monomere gerührt, dann wird abgekühlt, mit Redoxmittel und Konservierungsmittel stabilisiert und der pH-Wert eingestellt.
Für Anwendungen in sauren Formulierungen kann die Dispersion bei pH 6 belassen werden, für Anwendungen in neutralen oder basischen Formulierungen kann der pH durch Zusatz von Ammoniakwasser auf 7 bis 8 eingestellt werden.

### Nach der pH-Einstellung wird über ein feines Gaze-Filter filtriert

### Ansatz Wachscopolymer Acrylat mit MFT 32

| Substanz | Menge |
|---|---|
| Dispersion gemäß Beispiel 2 | 450 |
| Emulgator 28 %ig | 52,89 |
| Monomer 1 | 70,1 |
| Monomer 2 | 397,8 |
| Ammoniumperoxodisulfat | 1,5 |
| E-Wasser | 1019,36 |
| Ascorbinsäure | 1,4 |
| H₂O₂ 30 %ig | 6,95 |
| Ammoniak 25 %ig | |
| Saniprot 94-08 | 0,6 |

| | |
|---|---|
| Viskosität: | 150 cps, |
| Festkörper: | ca. 30 %, |
| Transparenz: | ca. 55 % in 1 %iger Verdünnung, |
| Dichte: | ca. 1,03 kg/l |
| MFT: | ca. 32 |

### Monomer 1 und Monomer 2 sind Mischungen aus

| | | |
|---|---|---|
| Methylmethacrylat | MMA | 230,5 |
| Ethylacrylat | EA | 233,9 |
| Methacrylsäure | MAS | 3,5 |

### Beispiel 4

### Herstellbeispiel für eine Wachscopolymerdispersion mit MFT 16

Wasser, Emulgator und ein Teil von Monomer 1 werden vorgelegt und auf 75°C aufgeheizt Ammoniumperoxodisulfat wird in E-Wasser gelöst und zugeben. Nach dem Start der Reaktion wird auf 80°C aufgeheizt und der Rest von Monomer 1, Monomer 2 und die Reaktivwachsdispersion aus Beispiel 2 dosiert. Der Ansatz wird bis zur vollständigen Umsetzung der Monomere gerührt, dann wird abgekühlt, mit Redoxmittel und Konservierungsmittel stabilisiert und der pH-Wert eingestellt.
Für Anwendungen in sauren Formulierungen kann die Dispersion bei pH 6 belassen werden, für Anwendungen in neutralen oder basischen Formulierungen kann der pH durch Zusatz von Ammoniakwasser auf 7 bis 8 eingestellt werden.

Nach der pH-Einstellung wird über ein feines Gaze-Filter filtriert.

### Ansatz Wachscopolymer Acrylat mit MFT 16

| Substanz | Menge |
|---|---|
| Dispersion gemäß Beispiel 2 | 450 |
| Emulgator 28 %ig | 52,89 |
| Monomer 1 | 70,1 |
| Monomer 2 | 397,8 |
| Ammoniumperoxodisulfat | 1,5 |
| E-Wasser | 1019,36 |
| Ascorbinsäure | 1,4 |
| H₂O₂ 30 %ig | 6,95 |
| Ammoniak 25 %ig | |
| Saniprot 94-08 | 0,6 |

| | |
|---|---|
| Viskosität: | 150 cps, |
| Festkörper: | ca. 30 %, |
| Transparenz: | ca. 55 %, 1 %ig, |
| Dichte : | ca. 1,03 kg/l |
| MFT: | ca.16 |

### Monomer 1 und Monomer 2 sind Mischungen aus

| | | |
|---|---|---|
| Methylmethacrylat | MMA | 207 |
| Ethylacrylat | EA | 257,4 |
| Methacrylsäure | MAS | 3,5 |

### Beispiel 5

### Herstellbeispiel für eine Wachscopolymer Styrol/Acrylat mit MFT 32

Wasser, Emulgator und ein Teil von Monomer 1 werden vorgelegt und auf 75°C aufgeheizt Ammoniumperoxodisulfat wird in E-Wasser gelöst und zugeben. Nach dem Start der Reaktion wird auf 80°C aufgeheizt und der Rest von Monomer 1, Monomer 2 und die Reaktivwachsdispersion aus Beispiel 2 dosiert. Der Ansatz wird bis zur vollständigen Umsetzung der Monomere gerührt, dann wird abgekühlt, mit Redoxmittel und Konservierungsmittel stabilisiert und der pH-Wert durch Zusatz von Ammoniakwasser auf 7 bis 8 eingestellt.

Nach der pH-Einstellung wird über ein feines Gaze-Filter filtriert.

### Ansatz Wachscopolymer Styrol/Acrylat mit MFT 32

| Substanz | Menge |
|---|---|
| Reaktivwachsdispersion | 450 |
| Dispersogen LFES | 52,89 |
| Monomer 1 | 70,1 |
| Monomer 2 | 397,8 |
| Ammoniumperoxodisulfat | 1,5 |
| E-Wasser | 1019,36 |
| Ascorbinsäure | 1,4 |
| H₂O₂ 30 %ig | 6,95 |
| Ammoniak 25 %ig | |
| Saniprot 94-08 | 0,6 |

| | |
|---|---|
| Viskosität: | 150 cps, |
| Festkörper: | ca. 30 %, |
| Transparenz: | ca. 55 % in 1 %iger Verdünnung |
| Dichte : | ca. 1,03 kg/l |
| MFT: | ca. 32 |

| | | |
|---|---|---|
| Styrol | Styrol | 99,4 |
| Methylmethacrylat | MMA | 124,5 |
| Ethylacrylat | EA | 257,5 |
| Methacrylsäure | MAS | 3,5 |

### Beispiel 6

### Herstellbeispiel für eine Wachscopolymerdispersion mit MFT 32 core shell, core vernetzt

Wasser, Emulgator und ein Teil von Monomer 1 werden vorgelegt und auf 75°C aufgeheizt Ammoniumperoxodisulfat wird in E-Wasser gelöst und zugeben. Nach dem Start der Reaktion wird auf 80°C aufgeheizt und der Rest von Monomer 1, Monomer 2 und die Reaktivwachsdispersion aus Beispiel 2 dosiert. Der Ansatz wird bis zur vollständigen Umsetzung der Monomere gerührt, dann wird abgekühlt, mit Redoxmittel und Konservierungsmittel stabilisiert und der pH-Wert durch Zusatz von Ammoniakwasser auf 7 bis 8 eingestellt.

Nach der pH-Einstellung wird über ein feines Gaze-Filter filtriert.

| Ansatz Beispiel 6 | Menge |
|---|---|
| Dispersion gemäß Beispiel 2 | 450 |
| Emulgator | 52,89 |
| Monomer 1 | 70,1 |
| Monomer 2 | 397,8 |
| Ammoniumperoxodisulfat | 1,5 |
| E-Wasser | 1019,36 |
| Ascorbinsäure | 1,4 |
| H₂O₂ 30 %ig | 6,95 |
| Ammoniak 25 %ig | |
| Saniprot 94-08 | 0,6 |

| | |
|---|---|
| Viskosität: | 150 cps, |
| Festkörper: | ca. 30 %, |
| Transparenz: | ca. 55 %, 1 %ig, |
| Dichte: | ca. 1,03 kg/l |
| MFT: | ca. 18 |

| | | |
|---|---|---|
| Methylmethacrylat | MMA | 121,1 |
| Ethylacrylat | EA | 257,5 |
| Methacrylsäure | MAS | 3,5 |
| Styrol | Styrol | 81,9 |

### Beispiel 7

### Herstellbeispiel für eine farbige reaktive Wachsdispersion

Reaktivwachs Licomont ER 165 bei einer Temperatur < 120°C unter langsamen rühren und das Wachs dabei aufschmelzen. Den Farbstoff in die Schmelze geben und homogen verteilen. Die Schmelze wird dann mit der Wasser/Emulgator Mischung bei 90°C kombiniert und die entstandene Emulsion wird schnell gekühlt. Der Festkörper der Dispersion liegt bei ca. 25 %, der Gehalt an polymerisierbarem Wachs liegt bei 20 %. Die so eingefärbte Wachsdispersion wird als reaktive Komponente in die Polymerisation eingesetzt

### Farbige reaktive Wachsemulsion

| Komponenten | Einheit | Menge |
|---|---|---|
| Licomont ER 165 | g | 20,48 |
| Emulgatormischung | g | 4,27 |
| KOH 43%ig | g | 0,85 |
| E-Wasser | g | 74,3 |
| Polysynthren -Rot FBL | | |
| Konservierungsmittel | g | 0,1 |

### Beispiel 8

### Farbige Wachscopolymerdispersionen

Wasser, Emulgator und ein Teil von Monomer 1 werden vorgelegt und auf 75°C aufgeheizt Ammoniumperoxodisulfat wird in E-Wasser gelöst und zugeben. Nach dem Start der Reaktion wird auf 80°C aufgeheizt und der Rest von Monomer 1, Monomer 2 und die mit Farbstoff eingefärbte Reaktivwachsdispersion aus Beispiel 7 dosiert. Der Ansatz wird bis zur vollständigen Umsetzung der Monomere gerührt, dann wird abgekühlt, mit Redoxmittel und Konservierungsmittel stabilisiert und der pH-Wert durch Zusatz von Ammoniakwasser auf 7 bis 8 eingestellt.

Nach der pH-Einstellung wird über ein feines Gaze-Filter filtriert.

### Ansatz Wachscopolymer Acrylat mit MFT 16

| Substanz | Menge |
|---|---|
| Dispersion gemäß Beispiel 7 | 450 |
| Emulgator 28 %ig | 52,89 |
| Monomer 1 | 70,1 |
| Monomer 2 | 397,8 |
| Ammoniumperoxodisulfat | 1,5 |
| E-Wasser | 1019,36 |
| Ascorbinsäure | 1,4 |
| H₂O₂ 30 %ig | 6,95 |
| Ammoniak 25 %ig | |
| Saniprot 94-08 | 0,6 |

| | |
|---|---|
| Viskosität: | 150 cps, |
| Festkörper: | ca. 30%, |
| Transparenz: | ca. 55 %, 1 %ig, |
| Dichte: | ca. 1,03 Kg/l |
| MTF: | ca. 16 |

### Monomer 1 und Monomer 2 sind Mischungen aus

| | | |
|---|---|---|
| Methylmethacrylat | MMA | 207 |
| Ethylacrylat | EA | 257,4 |
| Methacrylsäure | MAS | 3,5 |

Aus so hergestellten Dispersionen können in geeigneter Weise durch Sprühtrocknung Granulate hergestellt werden, die als Wachs oder Binderkomponente in farbigen Tonern eingesetzt werden können.

### Anwendungen

Die erfindungsgemäßen Wachscopolymerdispersionen können als Rohstoffe zur Herstellung von Beschichtungen eingesetzt werden. In solchen Formulierungen sind die üblichen Additive wie Netzmittel, Entschäumer, Hilfsmittel zur Filmbildung, Viscositätsregulatoren etc. enthalten.

Sie können rein oder in Kombination mit handelsüblichen Bindemittelsystemen wie Acrylatdispersionen, Styrol/Acrylaten oder PU Dispersionen eingesetzt werden. Die Formulierungen können als Klarlacke oder mit Farbmittel versetzt als Buntlacke eingesetzt werden. Beschichtungen enthaltend die erfindungsgemäßen Wachscopolymerdispersionen zeichnen sich aus durch kurze Trocknungszeit, seidigen Glanz und wachsartigen Griff.

### Anwendungsbeispiel Holzlack

### Wässrige Lackformulierung:

| | |
|---|---|
| MowilithLDM7460 | 35,00 |
| Dispersion gemäß Beispiel 4 | 40,00 |
| Wasser | 5,00 |
| Wasser | 1,00 |
| Saniprot 99-73 | 0,20 |
| Propandiol 1,2 | 1,00 |
| AMP90 | 0,20 |
| BYK 348 | 0,50 |
| Texanol | 1,00 |
| Agitan 295 | 0,20 |
| Wasser | 11,10 |
| Taf igel PUR 40 | 0,30 |
| Methoxybutanol | 2,50 |
| Mikronisat aus Beispiel 6 | 2,00 |
| Σ: | 100,00 |

Die erfindungsgemäßen Wachscopolymerdispersionen können auch getrocknet werden. Der Trocknungsrückstand kann dann gemahlen werden und als Tonerwachs oder als Additiv in Dispersionen als Antiblockmittel, Mattierungsmittel, Slipadditiv etc. eingesetzt werden.

## Patentansprüche

1. Copolymer aus mindestens zwei Monomeren ausgewählt aus der Gruppe enthaltend:
A Acrylsäureester/Methacrylsäureester,
B ethylenisch ungesättigte Säuren wie Acrylsäure, Methacrylsäure, Itaconsäure, C Styrol oder Styrolderivate,
D di- und trifunktionelle ethylenisch ungesättigte Verbindungen wie Divinylbenzol, Glykoldiacrylat, TMP Triacrylat,
E Vinylether,
F polymerisierbare Wachse,
wobei Komponente F in dem Copolymer in einer Menge von mindestens 1 Gew.-% enthalten sein muss.

2. Copolymer nach Anspruch 1 **dadurch gekennzeichnet, dass** es Monomere enthält in den Mengen
A Ester im Bereich von 10 bis 98 Gew.-%,
B Säuren im Bereich von 0,5 bis 5 Gew.-%,
C Styrol im Bereich von 0 bis 90 Gew.-%,
D di- und trifunktionelle Verbindungen im Bereich von 0 bis 5 Gew.-%,
E Vinylether im Bereich von 0 bis 20 Gew.-% und
F Wachse im Bereich von 1 bis 80 Gew.-%, jeweils bezogen auf das Gesamtgewicht des Copolymers.

3. Copolymer nach Anspruch 1 oder 2, **dadurch gekennzeichnet, dass** es als wässrige Dispersion, als getrockneter Festkörper oder als getrockneter Festkörper mit gezielt eingestellter Partikelgröße vorliegt.

4. Verfahren zum Herstellen von Copolymer nach einem der Ansprüche 1 bis 3, bei dem die Monomeren in Emulsion gebracht und dann einer radikalischen Polymerisation unterworfen werden.

5. Verfahren nach Anspruch 4, **dadurch gekennzeichnet, dass** die Partikelgröße des Copolymers durch Agglomeration und Trocknung, durch Trocknung und Mahlung oder durch Sprühtrocknung und Klassierung eingestellt wird.

6. Verwendung von Copolymer nach einem der Ansprüche 1 bis 3 zur Beschichtung von Papier, von Holz, von Fußböden, von Saatgut oder zur Autopflege.

7. Verwendung von Copolymer nach einem der Ansprüche 1 bis 3 als Bindemittel in Druckfarben oder in Tinten, in Lacken oder in Saatgut.

8. Verwendung von Copolymer nach einem der Ansprüche 1 bis 3 zur Partikelbeschichtung.

9. Verwendung von Copolymer nach einem der Ansprüche 1 bis 3 als Mattierungsmittel in Lacken.

10. Verwendung von Copolymer nach einem der Ansprüche 1 bis 3 als Tonerwachs.
